# EUROPEAN PATENT SPECIFICATION

(11) **EP 0 641 617 B1**
(45) Date of publication and mention of the grant of the patent: **28.01.1998**
(21) Application number: 94850146.5
(22) Date of filing: 29.08.1994
(51) Int. Cl.: B23C 5/24, B23C 5/00

(54) **Milling cutter body comprising cutting inserts with angular adjustment**
Fräskörper mit Schneideinsätzen dessen Winkel einstellbar ist
Corps de fraise ayant des plaquettes de coupe avec réglage angulaire

(30) Priority: 06.09.1993 SE 9302852
(43) Date of publication of application: 08.03.1995
(73) Proprietor: SANDVIK AKTIEBOLAG, 811 81 Sandviken (SE)
(72) Inventor: Post, Yngve, S-811 52 Sandviken (SE)

(56) References cited:
- CH-A- 564 397
- GB-A- 742 385
- US-A- 2 586 955
- US-A- 2 972 802

## Description

The present invention relates to a milling cutter body for chip-breaking machining.

A typical milling tool comprises a milling cutter body which is fastenable at the end of a rotating shaft in a predetermined relation to its rotational axis, and a plurality of cutting edges being carried by the milling cutter body at a radial distance from the rotational axis on the side of the cutter body which is distanced from the shaft, so that the cutting edges describe a circle around the central rotational axis of the shaft when the cutter body is rotated by the shaft. All parts of the milling cutter body are axially and radially behind the cutting edges, so that these may unobstructedly come into contact with and machine the surface of a workpiece that is held by the machine in which the shaft rotates. Since the cutting edges are short, they perform a relatively narrow cutting, wherefore the tool is used with a transversal feed, i.e., the direction of feed is parallel to the machined surface of the workpiece.

In relation with milling cutters with mechanically fastened cutting inserts, it has turned out to be difficult to fasten the inserts with the required precision for obtaining a fine smooth surface on the workpiece and a long tool-life. In order to attain the required surface smoothness it is necessary that the cutting edges attain a possibly exact position, both radially and axially. Moreover, an exact positioning of the so called parallel land angle is very important for the fineness and smoothness of the produced surface. The "parallel land angle" is the angle between the operative cutting edge and the produced surface. This angle shall be as small as possible, with other words it should preferably be 0. However, it has prooved to be very difficult to attain this, in particular having regard to the fact that all cutting edges of the cutter body shall have this minimized parallel land angle.

US-A-2 972 802 discloses a milling cutter according to the preamble of claim 1. This known milling cutter is provided with adjustable radial rake, in which the inserted cartridges are inclined relative to the rotational axis of the cutter body. The cartridges and the recesses in the milling cutter are provided with cooperating serrations. An adjustment of the rake can not be made smaller than the width of one serration, which is not satisfactory in a modern precision tool.

Thus, a first object of the present invention is to provide a milling cutter body comprising cutting edges, whose parallel land angles can be finely adjusted with highest possible precision.

A second object of the present invention is to make possible said fine adjustment of the parallel land angle at the same time as there is a possibility of finely adjusting the axial position of the cutting edges.

Another object of the present invention is to, when necessary, compensate for the inclination of the spindle of the machine.

According to the invention, these objects have in a surprising manner been attained by the milling cutter body according to claim 1.

For illustrative but non-limiting purposes, the invention will now be described in more detail in relation with a prefered embodiment as shown in the appended drawings.

Figure 1 shows a perspective view of the milling cutter body according to the invention obliquely from above, carrying a cartridge.

Figure 2 shows a half of the milling cutter body of Fig. 1 in an exploded view.

Figure 3 shows a milling cutter body according to the invention in a perspective view obliquely from below.

Figure 4 shows a perspective view of a washer means according to the invention, for fastening a cartridge.

Figure 5 shows a perspective view of an insert-carrying cartridge according to the invention.

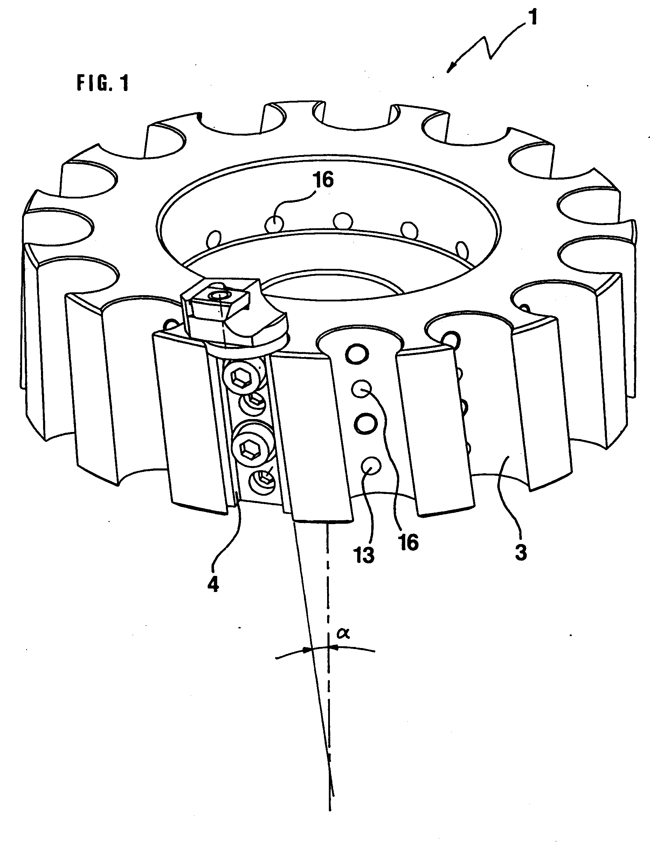

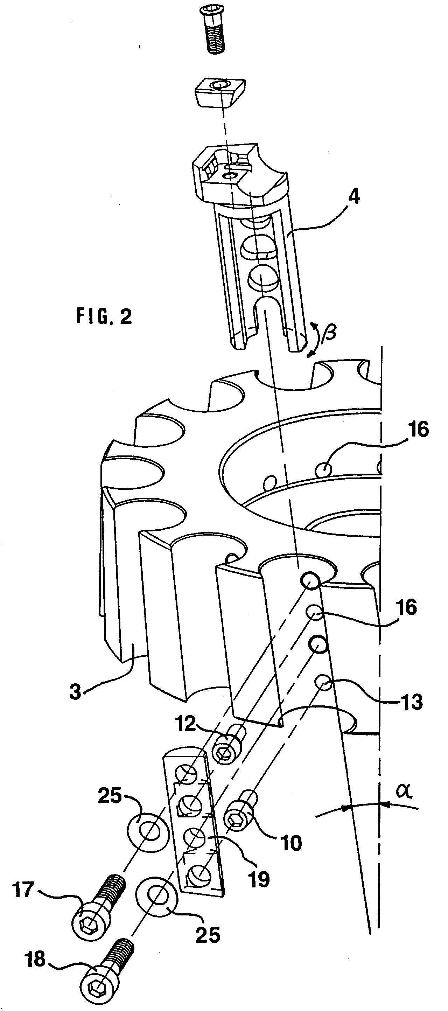

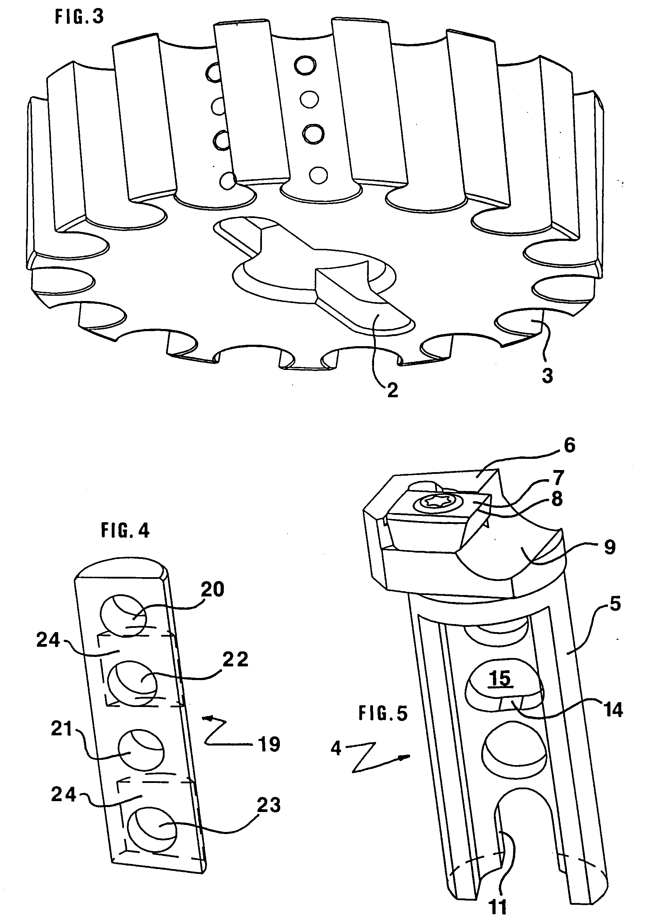

In Fig. 1 to 3 a milling cutter body of basic cylindrical form is designated by reference numeral 1 in its entirety. Its diameter may suitably be between 50 and 700 mm, preferrably between 70 and 500 mm and in particular between 80 and 350 mm. On the lower side of the cutter body is provided an elongate, diametrical holder recess 2 for fastening the cutter body in a rotating driving device. Along the cylindrical envelope surface of the cutter body are provided grooves 3 for accomodating insert-carrying cartridges 4. The cross-section of the smooth contacting surfaces between the cartridge and the groove have the form of a segment of a circle. Each cartridge comprises a shaft portion 5 and a head 6, the latter being arranged to carry a cutting insert 7, which in known manner is fastened on the cartridge by a locking screw 8, possibly with a shim placed underneath the cutting insert. The head 6 of the cartridge and the cutting insert 7 are dimensioned so that the operative cutting edge 8 will intersect or at least come very near to the centre axis of the cartridge. Thus, the distance between the centre axis of the cartridge and said cutting edge being perpendicular to the cutting edge, should not exceed 2 mm. Further, the head 6 of the cartridge is formed with a chip pocket 9 for effective conveying of the formed chips.

An essential feature of the present invention is that the grooves 3 are not parallel with the centre axis or the axis of rotation of the milling cutter body. Thus, as can be seen in Fig. 1 to 3 these grooves are somewhat inclined in relation to the centre axis of the cutter body. Preferably, this inclination is only in a tangential direction and not in a radial one. This inclination makes possible a fine adjustment of the parallel land by turning the cartridge around its centre axis. The inclination angle α of the cartridge in relation to the centre axis may vary between 1 and 15°, preferably between 2 and 10° and in particular between 3 and 8°. The turning angle of the cartridge around its own axis is designated β. The parallel land angle between the extension line of the cutting edge and the surface of the workpiece, whose fine adjustment is the object of the present invention, is designated δ. This angle is not shown in the figures. Between these three angles, the following mathematical interrelation exists:$\text{tanδ = 2·sin(β/2)·sinα}$

By using this equation, the following values may be calculated:

| | | | |
|---|---|---|---|
| β = | 1° | 1° | 1° |
| α = | 5° | 6° | 10° |
| δ = | 5′14˝ | 6′16˝ | 10′25˝ |

As may be seen from these values, a good approximation is that the numerical value for δ expressed in minutes corresponds about to the numerical value of α expressed in degrees, multiplied by the numerical value for β expressed in degrees. Generally one may say that the angle of inclination α and the necessary turning angle β are so adjusted that the resulting parallel land angle δ becomes sufficiently large for evening out the angle tolerances of the system and at necessity be capable of compensating for the inclination of the spindle of the machine. As is well known for the skilled man, the spindle is often positioned with a certain inclination to the surface of the workpiece in order to avoid that the rear cutting edges come into contact with and scratch the machined surface.

The fine adjustment of the parallel land angle is effected by turning the eccentric tap 10, whose head thereby actuates against the walls of the recess 11 and turns the cartridge around its central axis. These eccentric taps 10 are inserted in bottomed holes 13 in the cutter body. Further, the cartridge can be adjusted axially by eccentric tap 12, whose head actuates against the plane upper and lower parts 14 in cartridge holes 15. These holes are somewhat elongate in a direction perpendicular to the central axis of the cartridge in order to make possible the axial rotation of the cartridge, in the same way as the recesses 11 are elongate in the direction of the cartridge in order to make possible the axial adjustment. The eccentric taps 12 are inserted into holes 16, which are through in order to simplify the ejection of the eccentric tap when this is desired. The head of each eccentric tap may be provided with, e.g., a hexagonal hole to be turned by a hexagonal key.

When the desired axial and angular positions have been attained, the cartridge and thereby the cutting edge are fixed by two fastening screws 17 and 18, for instance by a hexagonal key. A washer means 19 is provided between the heads of screws 17,18 and the cartridge 4, the function of said washer means being to compensate for the bias which would otherwise be caused under the screw heads when the cartridge is turned. The side of the washer means facing the central axis of the cutter body is rounded and supports against a correspondingly rounded surface in a cavity in the cartridge. Each washer means 19 is formed with four through-holes: two holes 20,21 for fastening screws 17,18 and two holes 22,23 in order to reach eccentric taps 10,12. Since holes 22,23 have a smaller diameter than the heads of the eccentric taps, the taps are centrifugally secured. Further, washing means 19 is formed with two grooves or recesses 24 in order to accomodate that part of the heads of the eccentric taps which protrude out of the cartridge recess 11 and the cartridge hole 15, respectively. Under the head of each fastening screw 17,18 is provided a cup spring which has the purpose of maintaining an initial force when slightly slacking off the screw, which force is of the right magnitude for enabling an adjustment of the cartridge by the two eccentric taps without any play.

By the above described eccentric taps, a very precise angular and axial positioning of the operative cutting edge has been attained. It may be easily checked that the desired position has actually been attained, e.g., by a "thousandth gauge".

By the thus described invention a hitherto unattained precision when adjusting the parallel land angle has been achieved.

## Claims

1. Milling cutter body of basically cylindrical form comprising an upper side, a lower side and an envelope surface, a plurality of grooves (3) being arranged in the envelope surface, which grooves (3) have a basically circular cross-section, for the accomodation of insert-carrying cartridges (4) of a corresponding circular cross-section, the grooves (3) and thereby also the inserted cartridges (4) not being parallel to the central or rotational axis of the cutter body, but are inclined to said axis, *characterized in that* the positioning of the insert-carrying cartridge is effected by two eccentric taps, of which the one (12) is intended for the axial positioning of the cartridge and the other one (10) is arranged to rotate the cartridge (4) around its own central axis, in that the two taps (10, 12) are inserted in holes in the grooves, and in that the cartridge comprises a hole (15) against the upper and lower parts of which the one eccentric tap acts so as to effect the axial positioning, and a recess (11) against the walls of which the other tap (10) acts so as to rotate the cartridge (4) around its own central axis.

2. Cutter body according to claim 1,
**characterized** in that the angle between the central axes of the grooves and the central axis of the cutter body is between 1 and 15°, preferably between 2 and 10°.

3. Cutter body according to claim 2,
**characterized** in that said angle is between 3 and 8°.

4. Cutter body according any of claims 1 to 3,
**characterized** in that said grooves (3) are through from the upper side to the lower side.

5. Cutter body according to any of the preceding claims, **characterized** in that one or more fastening screws (17,18) are arranged for fastening the cartridge (4) after the desired axial and angular positions having been attained.

6. Cutter body according to any of the preceding claims, **characterized** in that a washer means (19) is provided between the heads of the fastening screws (17,18) and the cartridge (4), the side of said washer means facing the central axis of the cutter body being rounded and supporting against a correspondingly rounded surface in a cavity in the cartridge (4).

## Patentansprüche

1. Fräkörper einer grundsätzlich zylindrischen Form mit einer oberen Seite, einer unteren Seite und einer Umhüllungsoberfläche, wobei eine Vielzahl von Nuten (3) in der Umhüllungsobefläche angeordnet ist, die Nuten (3) einen grundsätzlich kreisförmigen Querschnitt haben, um Einsatz tragende Kassetten (4) eines entspechenden kreisförmigen Querschnittes aufzunehmen, wobei die Nuten (3) und dadurch auch die eingesetzten Kassetten (4) zu der zentralen oder Drehachse des Fräskörpers nicht parallel sind sondern zu dieser Achse geneigt sind, **dadurch gekennzeichnet, daß** da Positionieren der Einsatz tragenden Kassette durch zwei exzentrische Gewindezaplen erfolgt, deren einer (12) für die axiale Positionierung der Kassette vorgesehen und der andere angeordnet ist, um die Kassette (4) um ihre eigene Mittelachse zu drehen, daß die zwei Gewindezapfen (10, 12) in Löchern in den Nuten eingeführt sind und daß die Kassette ein Loch (15) aufweist, gegen dessen obere und untere Teile der eine exzentrische Gewindezapfen sich steuernd so vorbewegt, daß er die axiale Positionierung bewirkt, und eine Ausnehmung (11) aufweist, gegen dessen Wände der andere Gewindezapfen (10) sich derart steuernd bewegt, daß die Kassette (4) um ihre eigene Mittelachse gedreht wird.

2. Fräskörper nach Anspruch 1, dadurch gekennzeichnet, daß der Winkel zwischen den Mittelachsen der Nuten und der Mittelachse des Schneidkörpers zwischen 1 und 15°, vorzugsweise zwischen 2 und 10° beträgt.

3. Fräskörper nach Anspruch 2, dadurch gekennzeichnet, daß der Winkel zwischen 3 und 8° beträgt.

4. Fräskörper nach einem der Ansprüche 1 bis 3, dadurch gekennzeichnet, daß die Nuten (3) von der oberen Seite zur unteren Seite durchgehend sind.

5. Fräskörper nach einem der vorhergehenden Ansprüche, dadurch gekennzeichnet, daß eine oder mehrere Befestigungsschrauben (17, 18) für die Befestigung der Kassette (4) angeordnet sind, nachdem die gewünschten axialen und Winkelpositionen erhalten wurden.

6. Fräskörper nach einem der vorhergehenden Ansprüche, dadurch gekennzeichnet, daß ein Unterlagemittel (19) zwischen den Köpfen der Befestigungsschrauben (17, 18) und der Kassette (4) vorgesehen ist, wobei die Seite des Unterlegemittels, welche der Mittelachse des Fräskörpers zugewandt ist, gerundet ist und sich gegen eine entsprechend gerundete Oberfläche in einem Hohlraum in der Kassette (4) abstützt.

## Revendications

1. Corps de fraise de forme essentiellement cylindrique comportant un côté supérieur, un côté inférieur, et une surface d'enveloppe, un ensemble de cannelures (3) étant agencé sur la surface d'enveloppe, ces cannelures (3) ayant une section transversale essentiellement circulaire, destinées à recevoir des cartouches (4) qui portent des plaquettes, ces cartouches ayant une section transversale circulaire en correspondance, les cannelures (3) et de ce fait également les cartouches insérées (4) n'étant pas parallèles à l'axe central ou à l'axe de rotation du corps de fraise, mais étant inclinées par rapport audit axe, caractérisé en ce que le placement de la cartouche portant une plaquette est effectué au moyen de deux robinets excentriques, dont l'un (12) est destiné au placement longitudinal de la cartouche, et l'autre (10) est agencé de façon à pouvoir faire tourner la cartouche 4 autour de son propre axe central, en ce que les deux robinets (10, 12) sont insérés dans des trous dont sont munies les cannelures, et en ce que la cartouche comporte un trou (15) contre les parties supérieure et inférieure duquel pousse l'un des robinets excentriques afin de réaliser le placement longitudinal, et un évidement (11) contre les parois duquel pousse l'autre robinet (10) de façon à faire tourner la cartouche (4) autour de son propre axe central.

2. Corps de fraise selon la revendication 1, caractérisé en ce que l'angle entre les axes centraux des cannelures et l'axe central du corps de fraise est compris entre 1° et 15°, de préférence entre 2° et 10°.

3. Corps de fraise selon la revendication 2, caractérisé en ce que ledit angle est compris entre 3° et 8°.

4. Corps de fraise selon l'une quelconque des revendications 1 à 3, caractérisé en ce que lesdites cannelures (3) sont des cannelures traversantes du côté supérieur au côté inférieur.

5. Corps de fraise selon l'une quelconque des revendications précédentes, caractérisé en ce qu'un certain nombre de vis de serrage (17,18) sont agencées de manière à pouvoir fixer la cartouche (4), une fois que les positions longitudinale et angulaire recherchées ont été atteintes.

6. Corps de fraise selon l'une quelconque des revendications précédentes, caractérisé en ce qu'on a prévu un moyen de rondelle (19) entre les têtes des vis de serrage (17,18) et la cartouche (4), le côté dudit moyen de rondelle qui fait face à l'axe central du corps de fraise étant arrondi, et s'appuyant sur une surface arrondie en correspondance, aménagée dans un évidement de la cartouche (4).
